# EUROPEAN PATENT APPLICATION

(11) **EP 3 228 439 A1**
(43) Date of publication of application: **11.10.2017**
(21) Application number: 15864936.8
(22) Date of filing: 25.08.2015
(51) Int. Cl.: B29C 65/20, B29C 65/38

(54) **METHOD OF ATTACHING WATER-REPELLENT FILTER TO INLET OR OUTLET OF VENT HOLE FORMED IN THERMOPLASTIC RESIN MOLDED ARTICLE, THERMAL PROCESSING CHIP AND THERMAL WELDING CHIP FOR FILTER ATTACHMENT PART MOLDING AND FOR FILTER ATTACHMENT, AND MOLDED ARTICLE**

(30) Priority: 02.12.2014 JP 2014244031
(71) Applicant: Munekata Industrial Machinery Co., Ltd., Fukushima-shi, Fukushima 960-8157 (JP); W.L. Gore & Associates, Co., Ltd., Tokyo 108-0075 (JP)
(72) Inventor: SAITO, Toshihiko, Fukushima-shi Fukushima 960-8157 (JP); MANABE, Hiroshi, Okayama-shi Okayama 709-2123 (JP)
(74) Representative: ip21 Ltd
(86) International application number: PCT/JP2015/074558
(87) International publication number: WO 2016/088416

(57) **Abstract**

A method for reliably attaching a liquid-repellent filter to an air vent of a resin molded article in which an electronic part or any other component is accommodated, and a thermally processing tip and a thermally welding tip used in the method as well as a molded article are provided.

A thermally processing tip 22 is used to form a filter attachment surface 14, onto which a filter 18 is dropped, at the inlet or outlet of an air vent 16 formed in a thermoplastic resin molded article 13, and a filter fixing rib 15 is formed around the attachment surface 14.

The porous filter 18 is then dropped onto the filter attachment surface 14, and a thermally welding tip 2 is used to melt the filter fixing rib 15 in such a way that the melted resin is caused to flow onto and cover a circumferential edge portion of the filter 18 and penetrate the body of the filter 18.

Thereafter, the melted resin penetrating the filter 18 and the melted resin covering the circumferential edge portion of the filter 18 are so cooled as to solidify, whereby the filter 18 is fixed to the filter attachment surface 14.

## Description

### Technical Field

The present invention relates to a method for attaching a filter having water repellency with ensured air ventilation to an inlet or an outlet of an air vent formed in a thermoplastic resin molded article, a thermally processing tip and a thermally welding tip used in the attaching method, and a molded article.

### Background Art

In recent years, as the functionality of a mobile phone and an electronic part for an automobile advances, these parts are accommodated in thermoplastic resin cases.

The case is provided with an air vent that allows communication between the interior of the case and the outside air so that the electronic part is not adversely affected by a change in temperature and a change in atmospheric pressure.

However, the air vent with no protection may allow rain water to enter the case through the air vent, resulting in a problem in some cases. To avoid the problem, a filter that ensures air ventilation but prevents entry of rain water is attached to the air vent.

Further, since the case is strongly required to be compact and lightweight, the filter to be used is increasingly made thinner year by year.

From the viewpoints described above, as a method for attaching a filter to an air vent provided in a case, Patent Literature 1 discloses a thermally welding method including forming a recess in a thermoplastic resin molded article by using a heated plate, bringing a filter into the recess, and fixing the filter.

Further, as a method for welding a filter for filtering ink to a thermoplastic resin molded article, Patent Literature 2 discloses a method including providing a filter fixing portion with a plurality of fixing ribs, fixing an outer circumferential portion of the filter to the filter fixing portion, and further swaging the welding ribs to surround and fix the outer circumference of the filter.

Further, as a method for welding and fixing a water-repellent filter to a waterproofing resin product, Patent Literature 3 discloses a thermally caulking method including providing the circumference of the water-repellent filter with a thermally caulking rib, thermally deforming the rib in such a way that the rib is rounded inward and stacked on a circumferential edge portion of the water-repellent filter, and simultaneously using a welding hone to weld and fix the circumferential edge portion of the water-repellent filter to a water-repellent filter attachment portion.

### Citation List

### Patent Literature

Patent Literature 1: Japanese Patent Laid-Open No. 2006-231139
Patent Literature 2: Japanese Patent Laid-Open No. 08-118672
Patent Literature 3: Japanese Patent Laid-Open No. 11-111381

### Summary of Invention

### Technical Problem

In the method disclosed in Patent Literature 1 described above, however, the filter is fixed to the recess formed by a heated plate, but an outer circumferential portion of the filter remains unfixed. Therefore, when the filter is used, the unfixed outer edge portion is lifted up and broken or peeled off in some cases. Caution is therefore undesirably required in work using the filter.

In the method disclosed in Patent Literature 2 described above, a welding head is used to fix the filter with the double convex welding ribs and the filter outer circumference is fixed by swaging (turning down) the outer circumferential rib. In this case, however, the height of the filter changes as the front ends of the convex welding ribs are thermally deformed, resulting in wrinkles produced over the surface of the filter and along the outer circumference of the filter. Further, three welding apparatus, a welding apparatus, a swaging apparatus, and a rib-crashing, flat-finishing apparatus, are required, undesirably causing an increase in the number of steps and positional shift at the time of transition from each of the steps to another.

In the method disclosed in Patent Literature 3 described above, since the outer circumferential rib is deformed and covers the outer circumferential edge of the filter, there is no concern about the peeling off or separation of an outer edge portion, unlike in the Patent Literature 1. However, since the method includes thermally deforming the outer circumferential rib in such a way that the rib is rounded inward and stacked on the circumferential edge portion of the water-repellent filter and simultaneously using a welding hone to weld the circumferential edge portion of the water-repellent filter to the water-repellent filter attachment portion, the filter needs to have rigidity (thickness) to some extent. Therefore, in a case where the filter is made of a soft material or has a small film thickness (fluorine-based porous membrane having thickness of 0.3 mm or smaller, in particular, 0.1 mm or smaller), positional shift and wrinkles easily occur, resulting in insufficient water tightness in some cases.

Further, in this case, since it is assumed that the filter itself has meltability in the first place, the method cannot be applied to a filter made of a material having no meltability or a filter having a melting point higher than that of a molded article to which the filter is attached.

The present invention relates to a filter that is attached to an air vent in a thermoplastic resin molded article and particularly has a film thickness of 0.3 mm or smaller and is hence soft, for example, a filter that has no firm body and is hence flimsy, a filter that is prone to adhering to almost everything due to static electricity, or filters having any other undesirable physical properties, and an object of the present invention is to provide a filter attaching method that allows a filter to be precisely fixed to a filter attachment portion with no positional shift or wrinkle and prevents the filter from peeling off over time, a thermally processing tip for forming a filter attachment portion and a thermally welding tip for attaching a filter that allow efficient filter attachment, and a molded article with a filter attached to an inlet or an outlet of an air vent.

### Solution to Problem

To achieve the object described above, the invention described in claim 1 relates to a method for attaching a filter to an air vent, characterized in that the method includes: a. forming a filter fixing rib around an inlet or an outlet of an air vent formed in a thermoplastic resin molded article; b. then dropping a filer inside the filter fixing rib; c. then heating and melting the filter fixing rib to cause the melted resin to flow onto a circumferential edge of the filter and cover the circumferential edge of the filter and to penetrate the filter body at the same time; and d. then cooling the resin covering the circumferential edge of the filter and penetrating the filter body to allow the resin to solidify so that the filter is fixed to an inlet or outlet portion of the air vent.

The invention described in claim 2 is characterized in that in the filter attaching method described in claim 1, the air vent includes a sound hole

The invention described in claim 3 is characterized in that in the filter attaching method described in claim 1 or 2, the filter has a ventilation property and a liquid-repellency property.

The invention described in claim 4 is characterized in that in the filter attaching method described in any one of claims 1 to 3, the filter has a gap or a minute hole through which the melted resin penetrates the filter.

The invention described in claim 5 is characterized in that in the filter attaching method described in any one of claims 1 to 4, the filter has a thickness ranging from 30 to 300 µm.

The invention described in claim 6 is characterized in that in the filter attaching method described in any one of claims 1 to 5, the filter is made of a fluorine-based porous resin.

The invention described in claim 7 is characterized in that in the filter attaching method described in any one of claims 1 to 6, the filter has a melting point higher than a melting point of a molded article to which the filter is attached.

The invention described in claim 8 is characterized in that in the filter attaching method described in any one of claims 1 to 7, a surface of a filter drop portion surrounded by the fixing rib is lower than, flush with, or higher than a surface of the molded article.

The invention described in claim 9 is characterized in that in the filter attaching method described in any one of claims 1 to 8, the filter fixing rib formed in the molded article is molded integrally with the molded article when the molded article is molded.

The invention described in claim 10 is characterized in that in the filter attaching method described in any one of claims 1 to 9, the filter has a circular or polygonal contour.

The invention described in claim 11 relates to a filter attachment portion forming method including heating and melting a front end of a thermally processing tip while causing the front end to sink into a circumferential edge portion of an inlet or an outlet of an air vent formed in a thermoplastic resin molded article to form a filter attachment surface at an inlet or outlet portion of the air vent in such a way that the filter attachment surface is lower than the inlet or outlet portion and raise the melted resin around the inlet or outlet portion by the sinking so as to form a filter attachment portion in the inlet or outlet portion of the air vent of the molded article, a filter fixing rib being formed in the inlet or outlet portion.

The invention described in claim 12 relates to a thermally processing tip for forming a filter attachment portion, characterized in that the thermally processing tip is formed by forming a center rib to be inserted into an inlet or an outlet of an air vent formed in a thermoplastic resin molded article, the center rib formed at a center of a front end surface of a tip main body, forming a heat generating surface around a base of the center rib, further forming a vertical wall surface in a vertical direction from a periphery of the heat generating surface, and further forming a positioning flange in a position recessed from the vertical wall surface.

The invention described in claim 13 relates to a thermally welding tip for attaching a filter, characterized in that the thermally welding tip is formed by forming a thermally processing rib on a front end surface of a tip main body, forming a gate rib in a periphery of the front end surface with an amount of protrusion of the gate rib smaller than an amount of protrusion of the thermally processing rib, and forming a heat generating press surface between the gate rib and the thermally processing rib.

The invention described in claim 14 is characterized in that the thermally processing tip described in claim 12 or the thermally welding tip described in claim 13 is based on an impulse heating method.

The invention described in claim 15 relates to a thermoplastic resin molded article characterized in that a filter having a water-repellency property and a ventilation property is attached to an inlet or an outlet of an air vent of the thermoplastic resin molded article based on a melted resin penetration effect.

### Advantageous Effects of Invention

According to the invention described in claim 1, a filter is dropped into a stepped portion formed at an inlet or an outlet of an air vent, a filter fixing rib is melted, the melted resin is caused to flow onto and cover a circumferential edge portion of the filter in the stepped portion and penetrate a body of the filter at the same time, and then the melted resin is so cooled as to solidify to fix the filter in the stepped portion.

As a result, no wrinkle or gap is produced when the filter is attached because no particular load is applied to the filter, whereby the filter is securely fixed with no concern about entry of rain water via the circumference edge portion of the filter.

Further, the invention described in claim 1, in which the filter is attached to the filter attachment portion formed with the thermally processing tip described in claim 12 by using the thermally welding tip described in claim 13, allows formation of the filter attachment portion at the inlet or the outlet of the air vent of the thermoplastic resin molded article and an increase in efficiency in the work of attaching the filter to the attachment portion.

Further, according to the invention described in claim 1, since the attached filter does not protrude into the space around the inlet or the outlet of the air vent, there is no concern about breakage of the filter due to contact with a hand or another part.

Further, according to the invention described in claim 1, since the melted resin covers the circumferential edge portion of the filter, the circumferential edge of the filter is fixed throughout the entire circumference. As a result, a situation in which separation occurs at the circumferential edge of the filter can be avoided.

Next, according to the invention described in claim 2, the present invention is also directed to a sound hole formed in a thermoplastic resin molded article.

Next, according to the invention described in claim 3, the present invention is directed to a filter having a ventilation property and a liquid-repellency property.

Next, according to the invention described in claim 4, the filter is fixed with further increased strength resulting from solidification of the penetrated resin.

Next, according to the invention described in claim 5, the present invention is also directed to a very thin filter.

Next, according to the invention described in claim 6, a filter having a ventilation property and a liquid-repellency property and readily allowing penetration of melted resin can be formed.

Next, according to the invention described in claim 7, the filter can be attached to the air vent of the resin molded article in a single step.

Next, according to the invention described in claim 8, the filter can be set in a correct position.

Next, according to the invention described in claim 9, formation of the filter fixing rib in a molded article requires no specific step, whereby the productivity is improved and the cost can be reduced.

Next, according to the invention described in claim 10, the filter can be selected and used in accordance with the shape of the air vent.

Next, according to the invention described in claim 11, the filter attachment portion can be processed in a production site in accordance with the size of the filter.

Next, according to the invention described in claim 12, the filter attachment portion can be readily formed in one-touch operation.

Next, according to the invention described in claim 13, since the filter can be readily attached, and the gate rib formed around the heat generating press surface comes into contact with the thermoplastic resin molded article as the thermally processing tip descends, a situation in which the melted resin extends off toward the outer circumference of the resin article is avoided, and the outer edge portion of the filter can be reliably fixed.

Next, according to the invention described in claim 14, the tip can be efficiently heated and readily controlled.

Next, according to the invention described in claim 15, since the filter is reliably attached to the air vent, a reliably molded article can be provided.

### Brief Description of Drawings

[Figure 1] Figure 1 shows a thermoplastic resin molded article having an air vent to which a filter is attached.
[Figure 2] Figure 2 is an enlarged view of a filter attachment portion.
[Figure 3] Figure 3 is an exterior view of a thermally processing tip for attaching the filter to the air vent.
[Figure 4] Figure 4 is a cross-sectional view of the thermally processing tip for attaching the filter to the air vent according to a first embodiment, the filter, and the air vent of the resin molded article.
[Figure 5] Figure 5(a) is a cross-sectional view in a case where a filter attachment surface is flush with a surface of the thermoplastic resin molded article, and
Figure 5(b) is a cross-sectional view in a case where the filter attachment surface is higher than the surface of the thermoplastic resin molded article.
[Figure 6] Figures 6(a) to 6(f) describe filter attaching steps described in claim 1.
[Figure 7] Figure 7 is an exterior view of a thermally processing tip for forming a filter attachment portion.
[Figure 8] Figure 8 is a cross-sectional view of the thermally processing tip for forming a filter attachment portion and an air vent of a resin molded article.
[Figure 9] Figures 9(a) to 9(e) describe a method for forming the filter attachment portion described in claim 2.
[Figure 10] Figures 10(a) and 10(b) describe concepts if attachment of a filter to a plurality of air vents.

### Description of Embodiments

In the present invention, two types of a thermally welding tip will be described: One is a thermally welding tip used to form a filter attachment portion that allows a filter to be attached to an inlet or an outlet of an air vent provided in a thermoplastic resin molded article; and the other is a thermally welding tip used to attach a filter to the formed attachment portion.

### Embodiments

A first embodiment of the present invention relates to a filter attaching method described in claim 1, a thermally processing tip and a thermally welding tip used to carry out the method and described in claims 12 and 13, respectively.

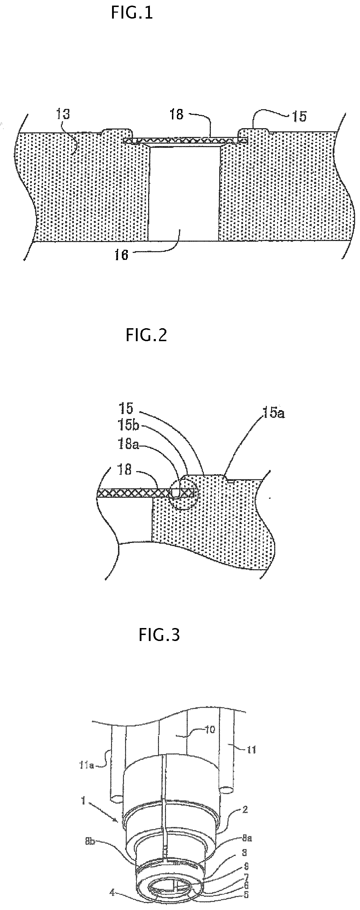

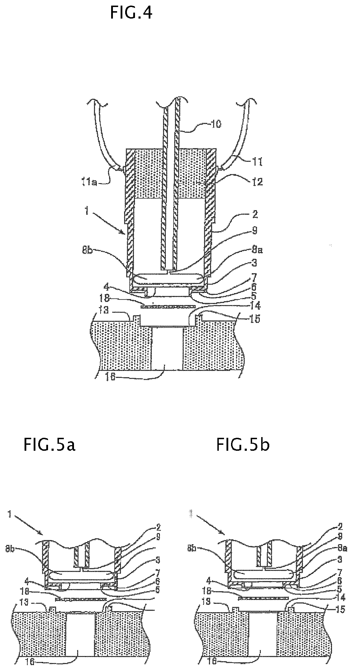

A thermally welding tip for filter attachment will first be described with reference to Figures 3 and 4. A thermally processing tip 2 of a thermally welding apparatus 1 has a heat generating press surface 6 so formed at a front end 3 of the tip 2 as to surround a clearance hole 4. A ring-shaped thermally processing rib 5 is so provided as to protrude from the inner side of the heat generating press surface 6, and a gate rib 7 is so provided as to protrude from the outer circumferential edge of the heat generating press surface 6.

The thermally processing rib 5 is higher than the gate rib 7 by 0.5 mm (or an arbitrary dimension according to the shape of the thermally processing rib in a case where the height difference is greater than or equal to 0.1 mm).

Reference characters 8 and 8a denote cooling air flow-out windows formed on the side having the rear of the heat generating press surface 6 and in symmetric positions. Reference characters 9 and 9a denote slits 15 formed on opposite side surfaces of the thermally processing tip 2 and in symmetric positions. Reference character 10 denotes a cooling air pipe. Reference characters 11 and 11a denote lead wires for voltage application. Reference character 12 denotes an insulator. Reference character 13 denotes a thermoplastic resin molded article. Reference character 14 denotes a filter attachment surface. Reference character 15 denotes a filter fixing rib. Reference character 16 denotes an air vent formed in the thermoplastic resin molded article 13. Reference character 17 denotes cooling air blown through the cooling air pipe 10. Reference character 18 denotes a water-repellent filter to be attached.

Providing the clearance hole 4 at the center of the front end of the thermally processing tip 2 prevents heat produced by the heat generating press surface 6 from affecting the filter 18.

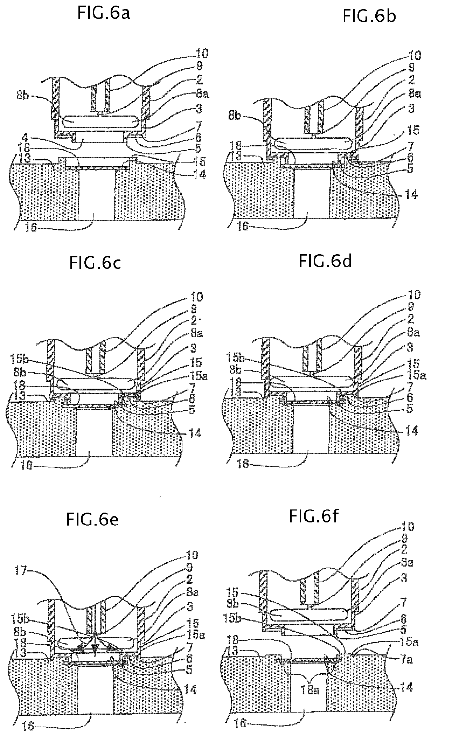

In Figure 4, in which the filter attachment surface 14 is formed at the inlet or the outlet of the air vent 16 of the thermoplastic resin molded article 13, and the filter fixing rib 15 is formed around the filter attachment surface 14, the filter 18 is dropped to and set at the filter attachment surface 14 manually or by using an automatic loader, as shown in Figure 6a.

The filter 18 in the present first embodiment is a porous membrane made of a fluorine resin (PTFE) with t=0.1 mm and φ=11.0 mm.

The thermally processing rib 5 of the thermally processing tip 2 has an outer diameter φ of 10.0 mm and an inner diameter φ of 9.0 mm. The gate rib 7 of the thermally processing tip 2 has an outer diameter φ of 17.0 mm. The step between the front end of the thermally processing rib 5 and the heat generating press surface 6 has a dimension of 0.8 mm. The step between the front end of the thermally processing rib 5 and the front end of the gate rib 7 has a dimension of 0.5 mm.

The thermoplastic resin molded article 13, to which the filter 18 is welded, is made of an ABS resin and provided with the air vent 16 having a diameter φ of 4.0 mm.

A method for attaching the filter 18 will next be described with reference to Figures 6a to 6f.

Figure 6a shows a state in which the filter 18 is dropped on the filter attachment surface 14, which is formed at the inlet of the air vent 16 of the thermoplastic resin molded article 13, and the thermally processing tip 2 of the thermally processing apparatus 1 is moved to a position above the filter 18 and is ready for processing.

Figure 6b shows a state in which the thermally processing tip 2 descends to a point where the heat generating press surface 6 of the thermally processing tip 2 comes into contact with the filter fixing rib 15 and a front end portion of the thermally processing rib 5 comes into contact with the filter 18 at the same time. At this point, when a power supply (not shown) applies voltage to the lead wires 11 and 11a, the heat generating press surface 6, which is formed at the front end of the thermally welding tip 2, generates heat due to the electric resistance of the heat generating press surface 6.

The temperature to which the thermally welding tip 2 is heated is controlled by the power supply, and it is further effective to perform feedback control using a thermocouple (not shown) attached to the front end of the thermally welding tip 2.

The temperature to which the thermally welding tip 2 is heated can be set as appropriate by selection of the materials of the filter 18 and the thermoplastic resin molded article 13, but the temperature to which the thermally welding tip 2 is heated needs to be higher than the melting point of the thermoplastic resin molded article 13 by at least 50°C but lower than the melting point of the filter 18.

In the first embodiment, the material of the thermoplastic resin molded article 13 is an ABS resin having a melting point of 110°C. The filter 18 is made of a porous polytetrafluoroethylene having a melting point of 327°C. The temperature to which the thermally welding tip 2 is heated is 260°C.

At the same time, the thermally welding tip 2 is pressed at an appropriate pressure by a drive apparatus that is not shown against the molded article 13.

The filter fixing rib 15 heated by and pressed against the heat generating press surface 6 of the thermally welding tip 2 starts melting from above and spreads rightward and leftward along the heat generating press surface 6, and the thermally welding tip 2 further descends accordingly, as shown in Figure 6c.

The thermally processing rib 5 of the thermally welding tip 2 having descended then comes into contact with the filter 18, as shown in Figure 6d. The thermally processing rib 5 heats the periphery of the filter 18 while pressing the filter 18.

In this process, when the thermally processing rib 5 descends (lowers), the thermally processing rib 5 gives the filter 18 force that widens the filter 18 from the center thereof toward the outer circumference thereof, whereby the filter 18 does not wrinkle.

The thermally processing rib 5 causes the filter 18 to lower onto the filter attachment surface 14 of the thermoplastic resin molded article 13 while deforming the filter 18 in a concave shape, and the melted resin of the thermally processing rib 5 penetrates the body of the filter 18 at the same time.

At this point, the filter fixing rib 15 having been heated and having therefore melted spreads rightward and leftward along the heat generating press surface 6 but does not reach the circumferential edge of the filter 18.

When the thermally welding tip 2 further descends, the melted resin reaches from an outer portion 15a of the filter fixing rib 15 to the gate rib 7 but is blocked by the gate rib 7 because the front end of the gate rib 7 is in contact with the thermoplastic resin molded article 13, as shown in Figure 6e. The melted resin thus does not flow out of the gate rib 7.

An inner portion 15b of the melted filter fixing rib 15 therefore flows downward along the thermally processing rib 5 and eventually covers a circumferential edge portion of the filter 18.

The position to which the thermally welding tip 2 descends is set in advance. In the present first embodiment, the descent position is set at a position where the thermally processing rib 5 comes into contact with the top of the filter 18 having a certain thickness (0.1 mm) and the thickness is reduced by one-half (0.05 mm).

Further, in the descent position, a state in which the gate rib 7 intrudes into the thermoplastic resin molded article 13 by 0.3 mm is achieved. As a result, a situation in which the outer portion 15a of the melted filter fixing rib 15 extends off is avoided, and a front end 20 of the gate rib 7 forms a parting groove 7a having a depth of 0.3 mm around the filter attachment surface 14 at the same time, whereby post-process exterior appearance is improved (see Figures 6e and 6f).

Setting the volume (cross-sectional area) of the filter fixing rib 15 in such a way that the post-process volume is smaller than the pre-process volume allows the filter fixing rib 15 melted in the position to which the thermally welding tip 2 descends to be pressurized between the thermally processing rib 5 and the gate rib 7, whereby the melted resin penetrates the filter 18. The ratio of the post-process volume of the filter fixing rib 15 to the pre-process volume thereof is selected as appropriate and ranges from 90 to 99%. The ratio is set at 95% in the present first embodiment.

Figure 2 shows a state in which the melted resin penetrates the filter 18 and covers the circumferential edge of the filter 18.

After a preset heating period elapses with the thermally welding tip 2 in the set descent position, the voltage application is terminated, and cooling air 17 is supplied through the cooling air pipe 10 provided as part of the thermally welding tip 2 at the same time, as shown in Figure 6e. Therefore, the cooling air 17 is blown to the rear side of the heat generating press surface 6, and the pressure of the blown air internally cools the front end 3 of the thermally welding tip 2 including the heat generating press surface 6 of the thermally processing tip 2.

The cooling air 17 is then discharged out of the thermally welding tip 2 through the flow-out windows 8 and 8a and the slits 9 and 9a.

As described above, cooling the front end 3 of the thermally welding tip 2 for a period set in advance allows the thermally processing rib 5, the heat generating press surface 6, and the gate rib 7 to be cooled, and the outer portion 15a and the inner portion 15b of the melted filter fixing rib 15 solidify. Further, resin 18a penetrating the filter 18 is cooled and solidifies, and the solidification of the penetrated resin more securely fixes the filter 18 to the thermoplastic resin molded article 13.

Thereafter, the supply of the cooling air 17 is terminated, and the thermally welding tip 2 is so lifted as to be separate above from the filter 18.

As a result, the filter 18 is fixed to the inlet of the air vent 16 of the thermoplastic resin molded article 13, as shown in Figure 6f.

Figure 1 is a cross-sectional view after the filter is attached.

In the present embodiment, the filter attachment surface 14 is lower than a surface of the thermoplastic resin molded article 13, as shown in Figure 5a. The filter can be attached in the same manner also in a case where the filter attachment surface 14 is flush with the surface of the thermoplastic resin molded article 13, as shown in Figure 5a, or a case where the filter attachment surface 14 is higher than the surface of the thermoplastic resin molded article 13, as shown in Figure 5b.

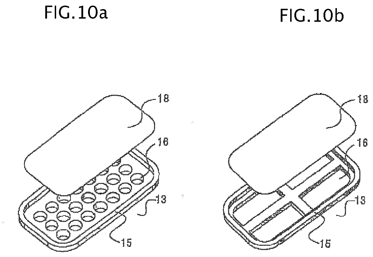

Further, each of the shape of the filter 18 and the shape of the air vent 16 of the filter attachment portion is not limited to a circular shape, and the present invention can be implemented in a case where each of the shapes is a polygonal shape. The invention can still further be implemented in a case where a plurality of air vents 16 are present, as shown in Figure 10a, and in a case where each air vent 16 has a roughly rectangular shape and a cross-shaped beam is present, as shown in Figure 10b. As clearly seen in the examples described above, the present invention can be applied to air vents 16 and filters 18 having a variety of shapes.

A second embodiment of the present invention relates to a thermally processing tip for forming a filter attachment portion described in claim 12 and a method for forming the filter attachment portion by using the tip.

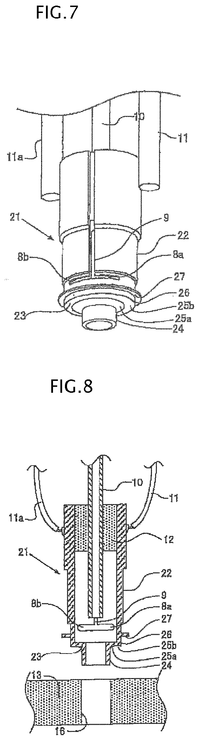

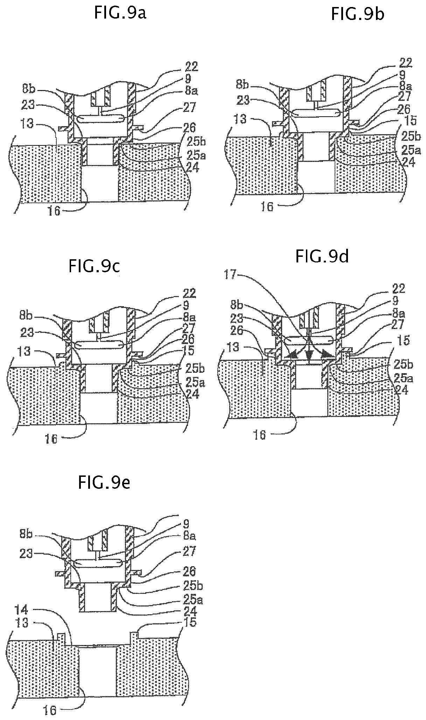

Figures 7 and 8 show the structure of the thermally processing tip, and Figures 9a to 9e show the method for forming the filter attachment portion described in claim 2.

A thermally processing tip 22 is used to form the filter attachment portion 14 and the filter fixing rib 15.

Figure 7 is a perspective view of a thermally processing apparatus for forming the filter attachment portion. Figure 8 is a longitudinal cross-sectional view of a central portion of the thermally processing apparatus. Figures 9a to 9e describe the formation method. Reference character 21 denotes the overall thermally processing apparatus, and reference character 22 denotes the thermally processing tip.

In the thermally processing tip 22, a cylindrical, centrally hollow guide portion 24 is so provided as to protrude from a heat generating surface 23 at the front end of the thermally processing tip 22, a chamfered portion 25a is formed around a potion recessed from the front end of the guide portion 24 and a filter attachment surface formation portion 25b is so formed as to follow the chamfered portion 25a, and a flange 27 is formed around the outer circumference 26 of the heat generating surface 23 and in a position recessed from the filter attachment surface formation portion 25b.

The front end of the guide portion 24 has a rounded portion having a radius of 0.3, and the outer circumference of the guide portion 24 has a 2°-tapered portion. The rounded portion and the tapered portion allow the thermally processing tip 22 to be smoothly inserted into the air vent 16 of the thermoplastic resin molded article 13 and the thermally processing tip 22 to be readily positioned.

Reference characters 8 and 8a denote cooling air flow-out windows formed in the side surface of the thermally processing tip 22 and in symmetric positions on the side facing the rear of the heat generating surface 23. Reference characters 9 and 9a denote vertically cut slits formed in the side surface of the thermally processing tip 22 and in symmetric positions. Reference character 10 denotes a cooling air pipe. Reference characters 11 and 11a denote lead wires for voltage application. Reference character 12 denotes an insulator. Reference character 13 denotes a thermoplastic resin molded article. Reference character 16 denotes an air vent formed in the thermoplastic resin molded article 13. Reference character 17 denotes cooling air blown through the cooling air pipe 10 after the thermally processing tip 22 melts and forms the filter attachment portion in Figure 9d described above to cool the melted portion with blown cooling wind and cause the melted portion to solidify.

A method for processing the filter attachment portion will next be described with reference to Figures 9a to 9e.

Figure 9a shows a state in which the guide portion 24 of the thermally processing tip 22 is inserted into the air vent 16 of the thermoplastic resin molded article 13. At this point, when a power supply (not shown) applies voltage to the lead wires 11 and 11a, the heat generating surface 23, which is formed at the front end of the thermally processing tip 22, generates heat due to the electric resistance of the heat generating surface 23.

At the same time, the thermally processing tip 22 is pressed at an appropriate pressure by a drive apparatus that is not shown against the molded product 13.

The diameter of the guide portion 24 at the base of the tapered portion thereof and at the boundary between the base and the chamfered portion 25a is equal to the diameter of the air vent 16. Further, since the guide portion 24 separates away from the heat generating surface 23 with distance toward the front end of the guide portion 24, the temperature in the guide portion 24 does not increase toward the front end thereof.

Therefore, when the melting starts, a circumferential edge portion of a rib around the air vent 16 that is in contact with the chamfered portion 25a is caused to flow toward the filter attachment surface formation portion 25b along the slope of the chamfered portion 25a. When the heating further advances, the portion in contact with the filter attachment surface formation portion 25b melts, but no resin flows toward the front end of the guide portion 24 but is caused to flow out of the filter attachment surface formation portion 25b, as shown in Figure 9b.

No burr is therefore formed in the air vent 16, and entry of foreign matter resulting from any burr into the air vent 16 can be avoided.

When the thermally processing tip 22 further descends, the filter attachment surface formation portion 25b of the thermally processing tip 22 sinks into the surface of the molded article 13 in a portion around the inlet of the air vent 16, and the heated, melted resin is pushed out toward the outer circumference 26 and raised there, as shown in Figure 9c. Eventually, the front end of the raised resin reaches the flange 27, as shown in Figure 9d.

As described above, the thermally processing tip 22 having sunk into the portion around the air vent 16 melts and pushes the resin corresponding to the amount of sink outward to form the filter attachment surface formation portion 25b, and the outer circumference 26 and the flange 27 form the filter attachment portion (stepped portion to which filter is dropped) 14 and the filter fixing rib 15 at the inlet of the air vent 16.

The position to which the thermally processing tip 22 descends is set in advance. In the present second embodiment, the descent position is set at a position where the filter attachment surface formation portion 25b and the filter fixing rib 15 are formed as intended in terms of dimension.

After a heating period elapses with the thermally processing tip 22 located in the set descent position, the voltage application is terminated, and cooling air 17 is supplied through the cooling air pipe 10 provided in the thermally processing tip 22 at the same time, as shown in Figure 9d. Therefore, the cooling air 17 is blown to the rear side of the heat generating surface 23, and the pressure of the blown air internally cools the front end of the thermally processing tip 22 including the rear side of the heat generating surface 23 of the thermally processing tip 22.

The cooling air 17 is then discharged out of the thermally processing tip 22 through the flow-out windows 8 and 8a, the slits 9 and 9a, and the hole of the guide 24.

As described above, cooling the heat generating surface 23 of the thermally processing tip 22 for a period set in advance allows the guide 24, the chamfered portion 25a, the filter attachment surface formation portion 25b, the outer circumference 26, and the flange 27 to be cooled, and the melted, raised resin solidifies into the filter fixing rib 15 having an annular shape in a plan view. Thereafter, the supply of the cooling air 17 is terminated, and the thermally processing tip 22 is lifted so that the thermally processing tip 22 is separated from the thermoplastic resin molded article 13.

As a result, the filter attachment surface 14 and the filter fixing rib 15 are formed around the inlet of the air vent 16 of the thermoplastic resin molded article 13, as shown in Figure 9e.

The configuration of the thermally processing tip 22, which forms the filter attachment portion and the method for forming the filter attachment portion have been described.

The filter 18 is attached to the thus formed filter attachment portion by using the thermally welding tip 2 described in the first embodiment.

In the present second embodiment, the material of the thermoplastic resin molded article 13 is an ABS resin, and the temperature of the thermally processing tip 22 is set at 260°C.

Figure 10a is a conceptual view of an example in which in a case where the molded article 13 is provided with a plurality of air vents 16, the single filter 18 covers the plurality of air vents 16 together, and the filter fixing rib 15 fixes the filter 18, and Figure 10b is a conceptual view of an example in which air vents 16 are formed in the form of a lattice in the molded article 13.

### Reference Signs List

- 1: Thermally processing apparatus
- 2: Thermally welding tip
- 3: Front end
- 4: Clearance hole
- 5: Thermally processing rib
- 6: Heat generating press surface
- 7: Gate rib
- 8: Cooling air flow-out window
- 9: Slit
- 10: Cooling pipe
- 11,: 11a Lead wires
- 12: Insulator
- 13: Thermoplastic resin molded article
- 14: Filter attachment surface
- 15: Filter fixing rib
- 16: Air vent
- 17: Cooling air
- 18: Filter
- 18a: Resin penetrating filter
- 21: Thermally processing apparatus
- 22: Thermally processing tip
- 23: Heat generating surface
- 24: Guide portion
- 25a: Chamfered portion
- 25b: Filter attachment surface formation portion
- 26: Outer circumference
- 27: Flange

## Claims

1. A method for attaching a filter to an air vent, the method comprising:
a. forming a filter fixing rib around an inlet or an outlet of an air vent formed in a thermoplastic resin molded article;
b. then dropping a filer inside the filter fixing rib;
c. then heating and melting the filter fixing rib to cause the melted resin to flow onto a circumferential edge of the filter and cover the circumferential edge of the filter and to penetrate the filter body at the same time; and
d. then cooling the resin covering the circumferential edge of the filter and penetrating the filter body to allow the resin to solidify so that the filter is fixed to an inlet or outlet portion of the air vent.

2. The filter attaching method according to claim 1, wherein the air vent includes a sound hole.

3. The filter attaching method according to claim 1 or 2, wherein the filter has a ventilation property and a liquid-repellency property.

4. The filter attaching method according to any one of claims 1 to 3, wherein the filter has a gap or a minute hole through which the melted resin penetrates the filter.

5. The filter attaching method according to any one of claims 1 to 4, wherein the filter has a thickness ranging from 30 to 300 µm.

6. The filter attaching method according to any one of claims 1 to 5, wherein the filter is made of a fluorine-based porous resin.

7. The filter attaching method according to any one of claims 1 to 6, wherein the filter has a melting point higher than a melting point of a molded article to which the filter is attached.

8. The filter attaching method according to any one of claims 1 to 7, wherein a surface of a filter drop portion surrounded by the fixing rib is lower than, flush with, or higher than a surface of the molded article.

9. The filter attaching method according to any one of claims 1 to 8,wherein the filter fixing rib formed in the molded article is molded integrally with the molded article when the molded article is molded.

10. The filter attaching method according to any one of claims 1 to 9, wherein the filter has a circular or polygonal contour.

11. A filter attachment portion forming method including heating and melting a front end of a thermally processing tip while causing the front end to sink into a circumferential edge portion of an inlet or an outlet of an air vent formed in a thermoplastic resin molded article to form a filter attachment surface at an inlet or outlet portion of the air vent in such a way that the filter attachment surface is lower than the inlet or outlet portion and raise the melted resin around the inlet or outlet portion by the sinking so as to form a filter attachment portion in the inlet or outlet portion of the air vent of the molded article, a filter fixing rib being formed in the inlet or outlet portion.

12. A thermally processing tip for forming a filter attachment portion, the thermally processing tip formed by forming a center rib to be inserted into an inlet or an outlet of an air vent formed in a thermoplastic resin molded article, the center rib formed at a center of a front end surface of a tip main body, forming a heat generating surface around a base of the center rib, further forming a vertical wall surface in a vertical direction from a periphery of the heat generating surface, and further forming a positioning flange in a position recessed from the vertical wall surface.

13. A thermally welding tip for attaching a filter, the thermally welding tip formed by forming a thermally processing rib on a front end surface of a tip main body, forming a gate rib in a periphery of the front end surface with an amount of protrusion of the gate rib smaller than an amount of protrusion of the thermally processing rib, and forming a heat generating press surface between the gate rib and the thermally processing rib.

14. The thermally processing tip for forming a filter attachment portion according to claim 12 or the thermally welding tip for attaching a filter according to claim 13, wherein each of the thermally processing tip and the thermally welding tip is based on an impulse heating method.

15. A thermoplastic resin molded article with a filter having a liquid-repellency property and a ventilation property attached to an inlet or an outlet of an air vent of the thermoplastic resin molded article based on a melted resin penetration effect.

## Amended claims

### Amended claims under Art. 19.1 PCT

1. (amended) A method for installing a filter on the inlet or outlet of a ventilation hole formed on a thermoplastic resin molded article, wherein: a thermal processing tip used for forming a filter installation surface on the inlet or outlet of the ventilation hole formed on the thermoplastic resin molded article has a construction in which a guiding portion is formed at the center of a top of the main body of the tip, the guiding portion to be inserted into the inlet or outlet of the ventilation hole formed on the thermoplastic resin molded article, while a pressing heating surface is formed around the base part of the guiding portion, and a flange is further formed on an outer circumference of the heating pressing surface at a position slightly set back; to form the filter installation surface using the thermal processing tip, the guide is inserted into the inlet or outlet of the ventilation hole on the thermoplastic resin molded article, with the thermal processing tip being heated electrically and pressed to cause the top of the thermal processing tip to sink in the inlet or outlet of the ventilation hole, thereby melting resin around the inlet or outlet of the ventilation hole, and the top is caused to sink until the molten resin comes in contact with the flange, thereby raising the circumference of the inlet or outlet of the ventilation hole to form a filter-fastening rib; a thermal welding tip for fastening the filter has a construction in which a thermal processing rib is jutted out at the center of the top surface of the thermal welding tip, and a gate rib is formed outside the thermal processing rib, thereby forming the pressing heating surface between the thermal processing rib and the gate rib; the filter is dropped on the filter installation surface formed on the inlet or outlet of the ventilation hole through use of the thermal welding tip, the thermal welding tip is heated electrically and caused to descend so that the pressing heating surface is pressed against the top of the filter-fastening rib while the filter-fastening rib is bent inward in a circular manner along the pressing heating surface and is simultaneously molten, and the molten resin covers the periphery of the filter such that the periphery is wrapped with the resin, while the top of the thermal processing rib causes the filter to bite into the surface of the filter installation surface; and then cooling air is blown to cool and harden the molten resin.

2. The method for installing a filter according to Claim 1, wherein the ventilation hole includes an acoustic hole.

3. The method for installing a filter according to Claim 1 or 2, wherein the fiter has a ventilation property and liquid repellency.

4. The method for installing a filter according to any of Claims 1 to 3, wherein fine gaps or pores through which the molten resin penetrates are formed on the filter.

5. The method for installing a filter according to any of Claims 1 to 4, wherein the filter has a thickness between 30 um and 300 um.

6. The method for installing a filter according to any of Claims 1 to 5, wherein the material of the filter is a porous fluororesin.

7. The method for installing a filter according to any of Claims 1 to 6, wherein the melting point of the filter is higher than the melting point of the molded article on which the filter is installed.

8. The method for installing a filter according to any of Claims 1 to 7, wherein the surface of the portion surrounded by the fastening rib to house the filter is formed a level lower than the surface of the molded article, or at the same level as the molded article, or at a level higher than the surface of the molded article.

9. The method for installing a filter according to any of Claims 1 to 8, wherein the filter-fastening rib to be formed on the molded article is molded integrally when the molded article is molded.

10. The method for installing a filter according to any of Claims 1 to 9, wherein the fiter has a circular or polygonal outline.

11. A method for forming a filter installation portion by forming the filter installation portion on the inlet or outlet of a ventilation hole formed on a thermoplastic resin molded article, wherein the top of a thermal processing tip is caused to sink in the periphery of the inlet or outlet of the ventilation hole while heating and melting the periphery, thus forming a level depressed filter installation surface on the inlet or outlet of the ventilation hole and simultaneously forming a filter-fastening rib by raising the molten resin through sinking of the thermal processing tip on the circumference of the inlet or outlet.

12. A thermal processing tip for forming a filter installation portion made by forming a center rib to be inserted into the inlet or outlet of a ventilation hole formed on a thermoplastic resin molded article at the center of the top surface of the main body of the tip while forming a heating surface around the base part of the center rib, forming a vertical wall extending from the circumference of the heating surface in the vertical direction, and then forming a positioning flange at a position set back from the vertical wall.

13. A thermal welding tip for filter installation made by forming a thermal processing rib on the top surface of the main body of the tip while forming a gate rib with a less protrusion than that of the thermal processing rib on the circumference of the top surface, and then forming a pressing and heating surface between the gate rib and the thermal processing rib.

14. The thermal processing for forming a filter installation portion or thermal welding tip for filter installation according to Claim 12 or 13, wherein the thermal processing tip and the thermal welding tip use an impulse heating method.

15. (deleted)
